(19) Europäisches Patentamt
European Patent Office
Office européen des brevets

(11) **EP 4 733 612 A1**

(12) **DEMANDE DE BREVET EUROPEEN**

(43) Date de publication:
**29.04.2026 Bulletin 2026/18**

(21) Numéro de dépôt: **25208418.1**

(22) Date de dépôt: **13.10.2025**

(51) Classification Internationale des Brevets (IPC):
*F16C 17/02* (2006.01)      *F16C 19/00* (2006.01)
*F16C 19/06* (2006.01)      *F16C 33/58* (2006.01)
*F16C 41/00* (2006.01)

(52) Classification Coopérative des Brevets (CPC):
**F16C 17/02; F16C 19/00; F16C 19/06;
F16C 33/586; F16C 41/001; F16C 41/002**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **26.10.2024 FR 2411727**

(71) Demandeur: **NTN Europe
74000 Annecy (FR)**

(72) Inventeurs:
• **BAUDU, Alexandre
  74010 ANNECY (FR)**
• **POURROY-SOLARI, Vincent
  74230 Thônes (FR)**
• **VANDAMME, Etienne
  74540 Allèves (FR)**

(74) Mandataire: **Alatis
3, rue Paul Escudier
75009 Paris (FR)**

(54) **CAGE DE GUIDAGE, DISPOSITIF ET PALIER À ROULEMENT ASSOCIÉS**

(57)      Une cage de guidage (40) est destinée à être positionnée au moins partiellement entre deux bagues, l'une des deux bagues étant une bague tournante apte à tourner par rapport à l'autre bague autour d'un axe de révolution, les deux bagues formant deux pistes de contact opposées, ayant chacune une symétrie de révolution autour de l'axe de révolution. La cage de guidage (40) comporte un corps annulaire (62), le corps annulaire (62) formant au moins une alvéole (66) destinée à accueillir un corps roulant de contact (35), la cage de guidage (40) étant caractérisée en ce qu'elle comporte au moins un dispositif de débrayage centrifuge (68) mobile, sous un effet de force centrifuge, entre une position d'accouplement, destinée à être en contact frottant avec la bague tournante, en deçà d'un seuil de vitesse angulaire de débrayage de la cage de guidage autour de l'axe de référence et une position désaccouplée, sans contact avec les deux bagues, au-delà du seuil de vitesse angulaire de débrayage.

Fig.10

EP 4 733 612 A1

**Description**

**DOMAINE TECHNIQUE DE L'INVENTION**

L'invention se rapporte à une cage de guidage destinée à être positionnée entre deux bagues en rotation relative l'une par rapport à l'autre, et par exemple intégrée à un palier lisse ou à roulement et notamment, bien que de manière non exclusive, à un palier à roulement ayant une fonction supplémentaire de passage de courant.

**ÉTAT DE LA TECHNIQUE ANTÉRIEURE**

Pour assurer la conduction électrique entre un sous-ensemble tournant et un sous-ensemble fixe, il serait tentant d'utiliser les paliers à roulement, dont la fonction principale est d'assurer le guidage en rotation relative entre les sousensembles tournant et fixe, dans la mesure où les éléments constitutifs de tels paliers, chemins de roulement et corps roulants, sont en matériaux conducteurs. Il s'avère toutefois que la lubrification nécessaire au fonctionnement d'un palier ne permet pas d'assurer de façon satisfaisante ce passage du courant à haute vitesse. En effet, on constate, lorsque la vitesse de rotation augmente, la formation d'un film de lubrifiant entre les corps roulants et les chemins de roulement, film dont l'épaisseur augmente avec la vitesse. Cet effet, souhaitable pour la fonction mécanique principale du palier, ne l'est pas pour la conduction électrique, car le lubrifiant se comporte comme un isolant électrique. En conséquence, une différence de potentiel entre les chemins de roulement engendre des arcs électriques qui altèrent rapidement le lubrifiant et la surface métallique des chemins de roulements et des corps roulants et provoquent un échauffement et des écaillages des chemins de roulement ou des corps roulants.

Pour pallier ce problème, il a été proposé dans le document JP 2022118903 d'adjoindre à un palier à roulement un dispositif de passage de courant comprenant des billes de contact roulant sur deux pistes de contact rapportées, l'une sur la bague intérieure et l'autre sur la bague extérieure. Les billes de contact sont réalisées en un matériau conducteur souple et poreux, qui a la double propriété d'absorber le lubrifiant au contact entre les billes et les pistes de contact et de s'écraser légèrement pour accroître la surface de contact avec les pistes de contact lorsque la vitesse augmente. On est ainsi assuré que le courant électrique traversant les bagues du palier à roulement passera de façon privilégiée par le dispositif de passage de courant dont l'impédance est sensiblement inférieure à celle du palier à roulement. Cette solution n'est toutefois pas performante en termes de frottements, notamment à basse vitesse, puisque le contact entre les pistes de contact et les billes est réalisé quelle que soit la vitesse de rotation, alors qu'à basse vitesse, les corps roulants du palier à roulement peuvent très bien réaliser la fonction de passage de courant. D'autres inconvénients liés à cette solution sont la difficulté technique de la réalisation des billes poreuses conductrices et le risque d'augmentation de bruit a vitesse élevée consécutif à la présence des porosités en surface de billes, car la rencontre des évidements des porosités de la surface de la bille réalise géométriquement des arrêtes qui peuvent être assimilées localement à des surfaces planes.

**EXPOSÉ DE L'INVENTION**

L'invention vise à remédier à au moins certains des inconvénients de l'état de la technique cités ci-dessus et à proposer une cage de guidage, pour un dispositif de passage de courant ou un palier lisse ou à roulement, dont le comportement soit différent à basse vitesse de rotation et à vitesse de rotation élevée, de façon à limiter les frottements et le couple de traînée à basse vitesse de rotation.

Pour ce faire est proposé, selon un premier aspect de l'invention, une cage de guidage destinée à être positionnée au moins partiellement entre deux bagues, l'une des deux bagues étant une bague tournante apte à tourner par rapport à l'autre bague autour d'un axe de révolution, les deux bagues formant deux pistes de contact opposées, ayant chacune une symétrie de révolution autour de l'axe de révolution, la cage de guidage comportant un corps annulaire définissant un axe de référence destiné à être confondu avec l'axe de révolution, le corps annulaire formant au moins une alvéole destinée à accueillir un corps roulant de contact, la cage de guidage étant remarquable en ce qu'elle comporte au moins un dispositif de débrayage centrifuge mobile, sous un effet de force centrifuge, entre une position dite d'accouplement, destinée à être une position de contact frottant avec la bague tournante, en deçà d'un seuil de vitesse angulaire dit de débrayage de la cage de guidage autour de l'axe de référence et une position dite désaccouplée, destinée à être sans contact avec les deux bagues, au-delà du seuil de vitesse angulaire de débrayage.

Le dispositif de débrayage permet de maintenir la cage de guidage solidaire de la bague tournante en deçà du seuil de vitesse angulaire de débrayage, et de libérer la cage au-delà. Tant que la cage de guidage et la bague tournante sont solidaires en rotation, le ou les corps roulants de contact restent également sans mouvement relatif par rapport à la bague tournante, limitant ainsi les frottements et le couple de traînée.

Selon un mode de réalisation, le dispositif de débrayage centrifuge comporte au moins une portion mobile reliée au corps annulaire par au moins un bras flexible. La portion mobile comprend une répartition des masses qui, conjuguée à la déformabilité contrôlée du bras flexible, permet de s'éloigner de la bague mobile lorsque la vitesse de rotation de la piste de contact est supérieure au seuil de vitesse angulaire de débrayage. Cependant, afin que la portion mobile ne se déplace pas radialement de façon excessive par rapport à sa position initiale, ce qui risquerait de détériorer le bras flexible et/ou d'amener la portion mobile au contact de l'autre bague, le dispositif de débrayage centrifuge comporte une butée positionnée en regard d'une partie au moins de la portion mobile, de sorte à limiter un débattement radial de la portion mobile au-delà du seuil de vitesse angulaire de débrayage. Le déplacement radial maximal de la portion mobile est dimensionné pour que, une fois en contact avec la butée, la limite élastique du matériau de la cage ne soit pas dépassée dans le bras flexible. En pratique, le débattement entre position d'accouplement et position désaccouplée est supérieure à 0,05 mm, de préférence supérieure à 0,10 mm, par exemple supérieure à 0,50 mm. La butée peut avoir une fonction supplémentaire de rigidification de la cage de guidage.

Selon un mode de réalisation, la portion mobile comprend un patin mobile destiné à être en contact frottant avec la bague tournante en position d'accouplement, c'est-à-dire en deçà du seuil de vitesse angulaire de débrayage. Le patin mobile est l'élément configuré pour adhérer par friction à la piste de contact de la bague tournante lorsque la vitesse de rotation de la bague tournante est inférieure au seuil de vitesse angulaire de débrayage, tandis que l'élasticité du bras flexible et la répartition des masses de la portion mobile sont déterminées de sorte à permettre le décollement du patin mobile de la piste de contact tournante lorsque la vitesse de rotation de la piste de contact est est supérieure au seuil de vitesse angulaire de débrayage, par centrifugation. En d'autres termes, la portion mobile présente une répartition de masse configurée pour provoquer une déformation du bras flexible induisant un décollement du patin mobile de la piste de contact au-delà du seuil de vitesse angulaire de débrayage.

Selon un mode de réalisation, le décollement du patin mobile est un mouvement éloignant la portion mobile de l'axe de référence. La cage permet donc de maintenir la bille de contact, quelle que soit la phase de fonctionnement du dispositif de passage de courant, c'est-à-dire en rotation ou à l'arrêt, entre les deux pistes de contact. De préférence, la cage de guidage comprend trois alvéoles équiréparties angulairement, de sorte à être isostatique et équilibrée.

Selon un mode de réalisation, l'alvéole a une dimension apte à laisser au corps roulant de contact une liberté de mouvement radial et/ou radial et axial, entre une première position et une deuxième position, plus éloignée de l'axe de référence que la première position. De préférence, l'alvéole est oblongue avec un grand axe radial ou sécant avec l'axe de référence. Suivant un mode de réalisation, l'alvéole est délimitée par au moins une butée axiale et deux facettes de guidage opposées ce faisant face dans une direction orthoradiale, les deux facettes de guidage étant de préférence planes ou concaves. La liberté de mouvement radiale du ou des corps roulants dans la ou les alvéoles permet de prévoir leur centrifugation lorsque la cage de guidage est entraînée à basse vitesse par la bague tournante à laquelle elle est solidarisée par l'intermédiaire du dispositif de débrayage centrifuge. Cette centrifugation des corps roulants permet de prévoir, avec des formes de pistes de contact adaptées pour les deux bagues, que les corps roulants se déplacent depuis une position, à basse vitesse de rotation, dans laquelle ils ne sont en contact qu'avec une seule des deux bagues, à une position, à moyenne vitesse de rotation de la cage, dans laquelle ils sont simultanément en contact avec les deux pistes de contact opposée, ceci avant que le seuil de vitesse angulaire de débrayage soit atteint et provoque la désolidarisation de la cage.

Une fois atteinte une vitesse de rotation suffisamment élevée de la piste de contact intérieure et/ou de la piste de contact extérieure et de la cage de contact, le dispositif de débrayage centrifuge est désolidarisé de la bague tournante. Le ou les corps roulants de contact sont alors l'élément entraînant de la cage de contact, et cette vitesse doit être suffisamment élevée si l'on souhaite que cet état soit stable.

À titre d'exemple, dans le cas où la cage de contact est destinée à être initialement entraînée par la piste de contact intérieure par l'intermédiaire du dispositif de débrayage centrifuge, et où les corps roulants de contact sont des billes, on peut estimer que l'effet centrifuge sur le ou les corps roulants de contact est suffisant dès lors que la force centrifuge exercée sur les billes est supérieure à la force de pesanteur sur les billes, ce que l'on peut traduire en première approximation par l'inégalité :

$$m\Omega_I{}^2 \frac{D_B + D_{CI}}{2} > mg$$

où m désigne la masse de la bille, $\Omega_I$ désigne la vitesse de rotation du sous-ensemble tournant, $D_B$ désigne le diamètre de bille, $D_{CI}$ désigne le diamètre de la piste de contact intérieure et g désigne l'accélération de la pesanteur. On peut ainsi définir une vitesse angulaire de changement de comportement $\Omega_{I0}$ telle que :

$$\Omega_{I0} = \sqrt{\frac{2g}{D_B + D_{CI}}}$$

Dès que la cage de guidage atteint le seuil de vitesse angulaire de débrayage $\Omega_S$, la cage est libérée de la bague tournante et entraînée en rotation par le roulement des billes sur les pistes de contact. La cage tourne alors à une vitesse $\Omega_C$ qui est inférieure à la vitesse de rotation de la bague tournante $\Omega_I$, et, en considérant un roulement sans glissement de la bille de contact et les bagues respectivement intérieur et extérieure, définie par la relation suivante :

$$\Omega_C = \Omega_I \frac{D_{CI}}{D_{CI} + D_{CE}}$$

où $D_{CI}$ désigne le diamètre du point de contact entre la bague tournante et la bille de contact et $D_{CE}$ désigne le diamètre du point de contact entre la bague fixe et la bille de contact.

Pour garantir la mise en rotation des billes, lorsque le seuil de vitesse de rotation de débrayage $\Omega_S$ est dépassé, $\Omega_C$ doit de préférence être supérieure à la vitesse angulaire de changement de comportement $\Omega_{I0}$, ceci afin que les billes restent par centrifugation dans la zone de contact avec les deux pistes de contact une fois le seuil de vitesse angulaire de débrayage $\Omega_S$ atteinte. On étalonne donc le dispositif de débrayage de préférence de telle sorte que :

$$\Omega_C > \Omega_{I0}$$

soit :

$$\Omega_I > \sqrt{\frac{2g}{(D_{CI} + D_{CE})} \times \frac{(D_{CI} + D_{CE})}{D_{CI}}}$$

En dessous du seuil de vitesse de débrayage $\Omega_S$, $\Omega_c = \Omega_1$, ce qui conduit à définir de préférence le seuil de vitesse angulaire de débrayage $\Omega_S$ de la cage tel que :

$$\Omega_s > \sqrt{\frac{2g}{(D_{CI} + D_{CE})} \times \frac{(D_{CI} + D_{CE})}{D_{CI}}}$$

Des considérations analogues peuvent être faites pour d'autres configurations.

Selon un mode de réalisation, la cage de guidage comporte une ou plusieurs languettes de retenue en saillie radiale, destinées à pénétrer dans une gorge de l'une des deux bagues de sorte à maintenir axialement la cage de contact dans sa position fonctionnelle.

Selon un mode de réalisation, la cage de guidage est réalisée d'une pièce en matière plastique, ce qui permet de minimiser le nombre de pièces et les coûts d'assemblage. Ainsi, la cage de guidage peut être fabriquée par moulage, et présente un poids relativement faible. Une telle cage peut être conçue en matière plastique puisqu'elle n'est pas destinée à subir des forces trop contraignantes risquant de la détériorer.

Selon un autre aspect de l'invention, celle-ci a trait à un dispositif tournant comportant :

- deux bagues, l'une des deux bagues étant une bague tournante apte à tourner par rapport à l'autre bague autour d'un axe de révolution, les deux bagues formant deux pistes de contact opposées, ayant chacune une symétrie de révolution autour de l'axe de révolution,

- une cage de guidage telle que décrite plus haut, dont le dispositif de débrayage centrifuge, est en contact frottant avec la bague tournante en position d'accouplement, et, est sans contact avec les deux bagues en position désaccouplée, et

- au moins un corps roulant de contact en matériau électriquement conducteur, logé dans l'au moins une alvéole de la cage de guidage, et apte à se déplacer dans l'alvéole de la cage de guidage par effet centrifuge au moins entre une première position de contact, qui est une position de contact avec une seule des deux pistes de contact opposées et une deuxième position de contact qui est une position de contact simultané avec les deux pistes de contact opposées.

Les pistes de contact permettent donc à la bille de contact un débattement axial selon la vitesse de rotation relative entre la bague intérieure et la bague extérieure, la force centrifuge poussant la bille de contact à s'éloigner de l'axe de référence et donc, en roulant sur la piste de contact extérieure, se déplacer axialement. Ce débattement axial est également permis par l'alvéole de la cage de guidage. Ainsi, lorsque la vitesse de rotation est suffisante, la bille de contact est en contact avec les deux pistes de contact simultanément.

Selon un mode de réalisation, le corps roulant de contact a une masse telle qu'il se déplace par effet centrifuge entre la première position de contact et la deuxième position de contact à une vitesse de rotation de la cage de guidage inférieure au seuil de vitesse angulaire de débrayage défini précédemment. Ceci permet d'assurer un bon séquencement du largage de la cage et de son entraînement par le ou les corps roulants.

De préférence, la cage de guidage présente une face de guidage située en regard et à distance inférieure à 0,5 mm et supérieure à 0,05 mm d'une face correspondante d'une des deux bagues de roulement. On assure ainsi un guidage radial de la cage dans toutes les phases de fonctionnement.

Selon un autre aspect de l'invention est proposé un palier à roulement, qui comporte :

- un dispositif tournant tel que décrit plus haut, les deux bagues étant deux bagues de roulement formant deux chemins de roulement opposés ayant chacun une symétrie de révolution autour de l'axe de révolution situés axialement à distance des deux pistes de contact opposées,

- une cage de roulement, distincte de la cage de guidage, et sans contact avec la cage de guidage,

- des corps roulants de guidage aptes à rouler simultanément sur les deux chemins de roulement et maintenus par la cage de roulement.

Un tel palier à roulement bénéficie alors de tous les avantages que présente le dispositif de passage de courant tel que susmentionné. Les corps roulants de guidage peuvent être des rouleaux ou des billes par exemple. Ils peuvent être métalliques, et lisse, c'est-à-dire sans porosité.

Selon un autre aspect de l'invention, celle-ci a trait à un palier lisse remarquable en ce qu'il comporte un dispositif tournant comme décrit précédemment, les deux bagues étant deux bagues de guidage lisses coopérant l'une avec l'autre par contact mutuel glissant ou par contact glissant chacune avec une face opposée d'un coussinet intermédiaire.

Dans une telle configuration, les pistes de contact et le ou les corps roulants de contact sont de préférence réalisés en matériau électriquement conducteur, par exemple en métal, pour assurer une fonction de passage de courant entre les deux bagues, au moins lorsque la vitesse de rotation de la cage dépasse le seuil de vitesse angulaire de débrayage.

## BRÈVE DESCRIPTION DES FIGURES

D'autres caractéristiques et avantages de l'invention ressortiront à la lecture de la description qui suit, en référence aux figures annexées.

La figure 1 illustre, dans une vue en coupe, un palier à roulement comprenant un dispositif de passage de selon un premier mode de réalisation.

La figure 2 illustre, dans une vue en coupe, le dispositif de passage de courant seul selon le premier mode de réalisation.

La figure 3 illustre, dans une vue isométrique et en coupe, un détail du roulement selon le premier mode de réalisation.

La figure 4 illustre, dans une vue isométrique, une cage du dispositif de passage de courant selon le premier mode de réalisation.

La figure 5 illustre une vue en coupe de la cage selon le premier mode de réalisation.

La figure 6 illustre un détail géométrique de la structure des pistes de contact du dispositif de contact selon le premier mode de réalisation.

La figure 7 illustre un détail des alvéoles de la cage.

La figure 8 illustre un détail d'un dispositif de débrayage de la cage selon le premier mode de réalisation.

La figure 9 illustre dans une vue en coupe, un roulement à billes comprenant le dispositif de passage de courant selon un deuxième mode de réalisation.

La figure 10 illustre dans une vue en coupe, la cage du dispositif de passage de courant selon le deuxième mode de réalisation.

La figure 11 illustre dans une vue en coupe, le palier à roulement comprenant le dispositif de passage de selon un troisième mode de réalisation.

La figure 12 illustre un détail du dispositif de débrayage de la cage selon le troisième mode de réalisation.

Pour plus de clarté, les éléments identiques ou similaires sont repérés par des signes de référence identiques sur l'ensemble des figures.

## DESCRIPTION DÉTAILLÉE DE MODES DE RÉALISATION

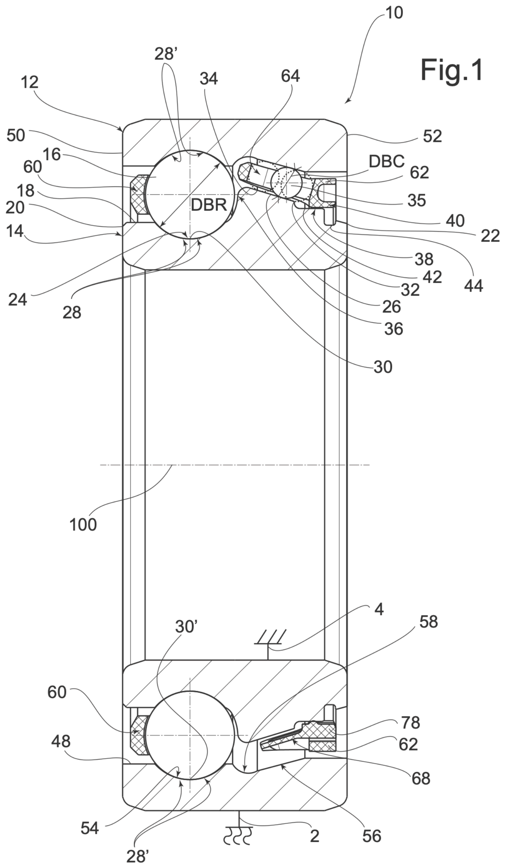

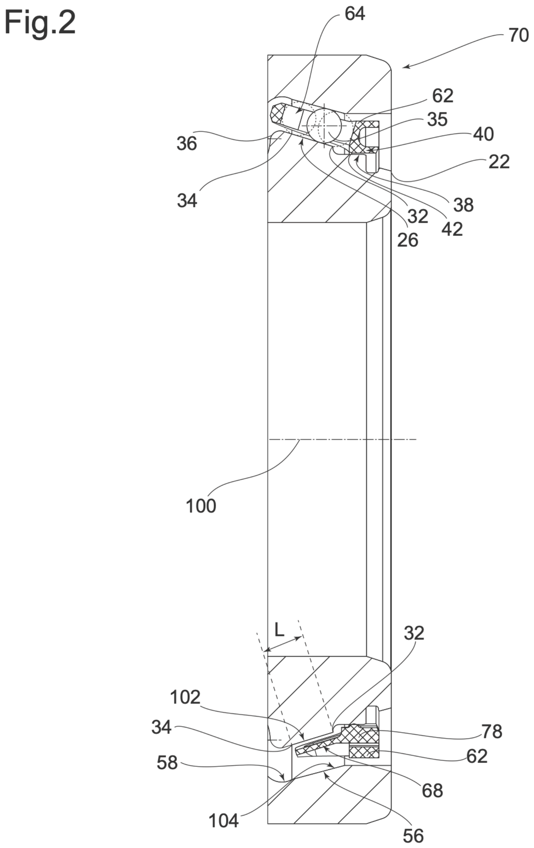

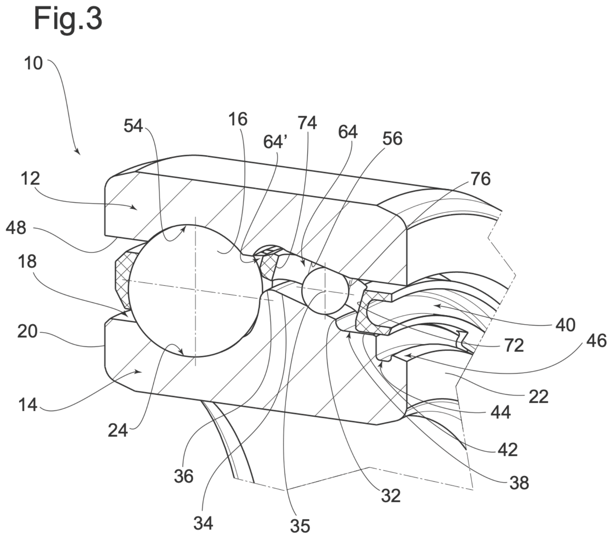

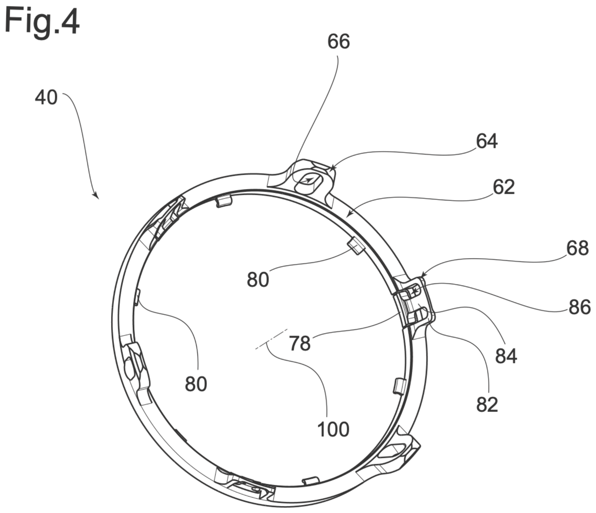

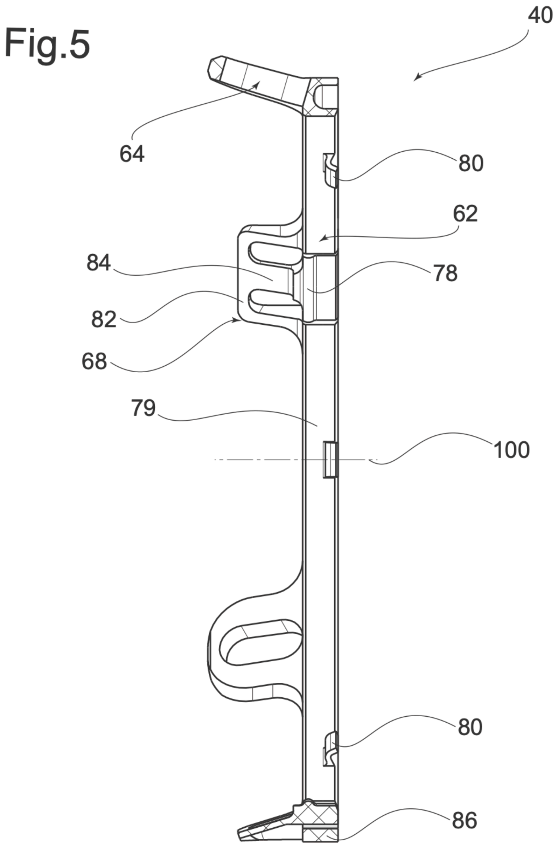

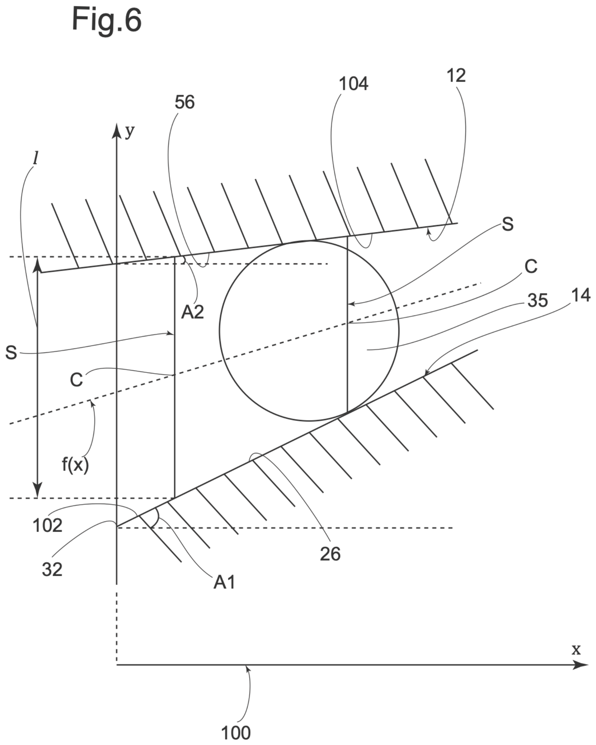

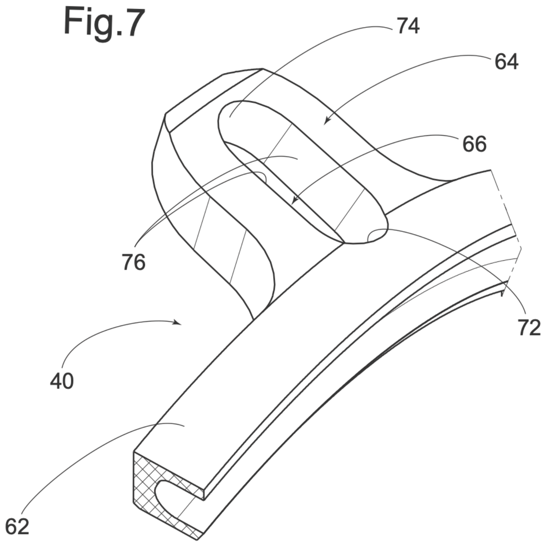

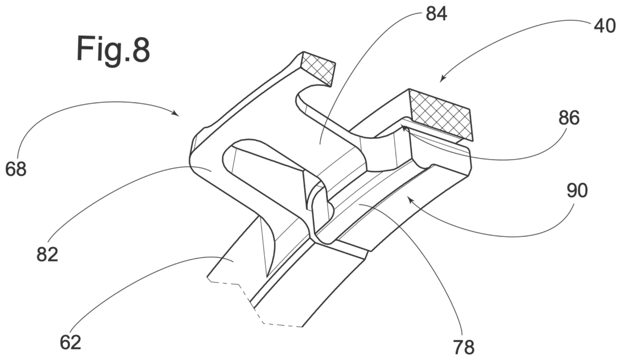

Sur les figures 1 à 10 est illustré un palier à roulement **10** entre un sous-ensemble fixe **2,** par exemple un carter d'un véhicule automobile (non représenté) et définissant un axe de référence **100,** et un sous-ensemble tournant **4,** par exemple un arbre, apte à tourner autour de l'axe de référence **100** à l'intérieur du sous-ensemble fixe **2,** le palier comportant une bague extérieure **12** métallique solidaire du sous-ensemble fixe **2,** une bague intérieure métallique **14** solidaire du sous-ensemble tournant **4,** et des corps roulants **16** entre la bague intérieure **14** et la bague extérieure 12. Le palier à roulement **10** comprend en outre un dispositif de passage de courant **70** illustré seul sur la figure 2.

La bague intérieure **14** est ici une bague intérieure métallique massive monobloc comprenant une surface annulaire intérieure **18** tournée radialement à l'opposé de l'axe de référence **100** et s'étendant entre une première face d'extrémité **20** et une deuxième face d'extrémité **22.** Sur la surface annulaire intérieure **18** sont formés un chemin de roulement intérieur **24** et une piste de contact intérieure **26** coaxiaux qui sont deux surfaces de révolution autour de l'axe de référence **100.** À cet effet, la bague intérieure **14** peut subir un traitement thermique et un usinage, tous deux localisés au niveau du chemin de roulement intérieur **24** et de la piste de contact intérieure **26.** Le chemin de roulement intérieur **24** est positionné à proximité de la première face d'extrémité **20** tandis que la piste de contact intérieure **26** est positionnée à proximité de la deuxième face d'extrémité **22.** La piste de contact intérieure **26** forme un premier élément du dispositif de passage de courant **70.**

Le chemin de roulement intérieur **24** comprend deux flancs **28** situés axialement de part et d'autre d'un fond de chemin **30,** et est destiné à accueillir les corps roulants **16,** qui sont ici des billes ayant un diamètre $D_{BR,}$

mais pourraient alternativement être des rouleaux, des cônes ou des tonnelets. Les corps roulants **16** sont composés, de préférence constitués, de métal, et sont configurés pour guider et supporter les charges extérieures radiales et/ou axiales.

La piste de contact intérieure **26** est quant à elle une surface tronconique, de préférence rectifiée, annulaire et présente une symétrie de révolution autour de l'axe de référence **100**. La piste de contact intérieure **26** s'étend entre une première extrémité intérieure **32**, à proximité de la deuxième face d'extrémité **22** et une deuxième extrémité intérieure **34** à proximité du chemin de roulement intérieur **24**. Elle est configurée pour accueillir des corps roulants de contact, et plus particulièrement billes de contact **35**. Les billes de contact **35** sont composées, de préférence constituées, de métal, et présentent un diamètre $D_{BC}$. Elles forment un élément du dispositif de passage du courant **70**. En outre, les billes de contact **35** sont configurées pour conduire le courant électrique entre la bague extérieure **12** fixe et la bague intérieure **14** tournante, et ainsi entre le sous-ensemble fixe **2** et le sous-ensemble tournant **4**. Contrairement aux corps roulants **16**, elles n'ont pas vocation à guider en rotation le sous-ensemble tournant **4**. Elles sont ici au nombre de 3, positionnées à 120° les unes des autres, mais en variante, elles peuvent être plus ou moins nombreuses. Le diamètre $D_{BC}$ des billes de contact **35** est de préférence strictement inférieur à la longueur L de la génératrice de la piste de contact intérieure **26**, afin de permettre un déplacement comprenant une composante axiale des billes de contact **35** sur la piste de contact intérieure **26** tout en diminuant l'encombrement axial de la bague intérieure **14**. Avantageusement, le diamètre $D_{BC}$ des billes doit être le plus petit possible pour réduire l'encombrement du dispositif de passage de courant **70**.

Selon un premier mode de réalisation illustré sur les figures 1 à 8, dans un plan de coupe comprenant l'axe de référence **100** (comme illustré sur la figure 1), la piste de contact intérieure **26** présente une génératrice intérieure **102** formant, avec l'axe de référence **100**, un angle **A1** de 17°. Plus généralement, cet angle **A1** est supérieur à 2°, de préférence supérieur à 14°, et inférieur à 47°, de préférence inférieur à 42°. La génératrice intérieure **102** de la piste de contact intérieure **26** est telle qu'elle s'éloigne de l'axe de référence **100** à mesure qu'elle se rapproche du chemin de roulement intérieur **24**. Le chemin de roulement intérieur **24** et la piste de contact intérieure **26** sont séparés par une surface de séparation intérieure **36**.

Sur la surface annulaire intérieure **18** est en outre formée une portion d'accueil **38** configurée pour accueillir sur la bague intérieure **14** une cage de guidage **40** décrite dans la suite de la présente demande. La portion d'accueil **38** est positionnée entre la deuxième face d'extrémité **22** et la piste de contact intérieure **26**. Elle comprend, à mesure qu'elle se rapproche de la deuxième face d'extrémité **22**, une face d'accueil **42** cylindrique circulairement, une gorge annulaire **44** et un chanfrein **46** débouchant sur la deuxième face d'extrémité **22**.

La bague extérieure fixe **12** est ici une bague métallique massive monobloc comprenant une surface annulaire extérieure **48** tournée radialement vers l'axe de référence **100** et s'étendant entre une première extrémité extérieure **50** et une deuxième extrémité extérieure **52**. Sur la surface annulaire extérieure **48** sont formés un chemin de roulement extérieur **54** et une piste de contact extérieure **56** coaxiaux définissant l'axe de référence **100**. À cet effet, la bague extérieure **12** peut subir un traitement thermique et un usinage, tous deux localisés au niveau du chemin de roulement extérieur **54** et de la piste de contact extérieure **56**. La piste de contact extérieure **56** forme un deuxième élément du dispositif de passage de courant **70**.

Le chemin de roulement extérieur **54** comprend deux flancs **28'** situés axialement de part et d'autre d'un fond de chemin **30'**. Le chemin de roulement extérieur **54** est situé en regard du chemin de roulement **24** et est destiné à accueillir les corps roulants **16**.

La piste de contact extérieure **56** présente une surface tronconique annulaire, de préférence rectifiée, et présente une symétrie de révolution autour de l'axe de référence **100**. La piste de contact extérieure **56** est située en regard et à distance de la piste de contact intérieure **26** et est configurée pour accueillir les billes de contact **35**. Dans un plan de coupe contant l'axe de référence **100** (comme illustré sur la figure 1), la piste de contact extérieure **56** présente une génératrice extérieure **104** formant, avec l'axe de référence **100**, un angle **A2** de 15°. Plus généralement, l'angle **A2** est supérieur à 1,5°, de préférence supérieur à 12°, et inférieur à 45°, de préférence inférieur à 40°. La génératrice extérieure **104** de la piste de contact extérieure **56** est telle qu'elle s'éloigne de l'axe de référence **100** à mesure qu'elle se rapproche du chemin de roulement extérieur **54**. En outre, à mesure qu'elle se rapproche du chemin de roulement extérieur **54**, elle s'éloigne de l'axe de référence **100** moins rapidement que la génératrice intérieure **102** de la piste de contact intérieure **26**. La piste de contact extérieure **56** présente plus généralement, dans tout plan de coupe comprenant l'axe de référence **100**, une génératrice formant, avec la génératrice de la piste de contact intérieure **26** un angle supérieur à 0,5°, de préférence supérieur à 1°, et inférieur à 30°, de préférence inférieur à 15°. Le chemin de roulement extérieur **54** et la piste de contact extérieure **56** sont séparés par une surface de séparation extérieure **58**.

Le roulement à billes **10** comprend en outre une cage de roulement **60**, configurée pour espacer et maintenir les corps roulants **16** dans des positions relatives déterminées, et la cage de guidage **40**, indépendante de la cage de roulement **60** et destinée à guider les billes de contact **35**. La cage de guidage **40**, qui appartient au dispositif de passage de courant **70**, comprend un anneau **62** présentant une face de guidage destinée à être en regard de la surface d'accueil **42**. L'anneau **62** comprend en outre des alvéoles **66** et au moins un dispositif de débrayage **68**. La cage de guidage **40** comprend ici trois alvéoles **66** décalées angulairement les unes des autres d'un angle 2π/3 de sorte que le dispositif de passage de courant **70** soit équilibré statiquement. Les alvéoles **66** sont saillantes axialement et radialement de l'anneau **62**, de sorte à pénétrer sans contact entre les pistes de contact. Pour ce faire, dans le plan de coupe comprenant l'axe de référence **100** et le centre d'une bille de contact **35** (illustré sur la figure 1), une alvéole **66** forme, avec l'axe de référence **100**, un angle moyen supérieur à 1.5°, de préférence supérieur à 12°, et inférieur à 45°, de préférence inférieure à 40°. Les alvéoles **66** sont définies par des éléments d'alvéole **64** rigides. Les alvéoles **66** sont équidistantes les unes des autres et présentent une forme ovoïdale, c'est-à-dire que le trou traversant de l'élément d'alvéole **64** destiné à accueillir la bille présente une dimension axiale supérieure à sa dimension orthoradiale. Ainsi, l'élément d'alvéole **64** présente une butée axiale **72** pour maintenir la bille de contact **35** entre les pistes de contact lorsqu'elle se déplace en direction de la deuxième face d'extrémité **22**, deux facettes de guidage **76** orthoradiales pour entrainer la bille de contact **35** orthoradialement et une liaison axiale **74**, opposée à la butée axiale **72**, et liant les deux facettes de guidage **76** orthoradiales entre elles de sorte à solidifier la structure de l'alvéole **66**.

Les dispositifs de débrayage **68** sont aussi au nombre de trois et sont répartis à équidistance les uns des autres. Ils sont aussi répartis à équidistance des deux alvéoles **66** adjacentes associées. Une telle répartition assure l'équilibrage statique de la cage, et permet de minimiser les contraintes mécaniques, donc de maximiser la résistance de ladite cage. Les dispositifs de débrayage **68** sont configurés pour entraîner la cage de guidage **40** en rotation avec la bague intérieure **14** à faible vitesse, et l'en désolidariser lorsque la vitesse angulaire dépasse un seuil prédéterminé, dit seuil de vitesse angulaire de débrayage. Pour ce faire, les dispositifs de débrayage **68** comprennent chacun au moins une portion mobile **90** liée à une structure rigide **82**, formée ici par une protrusion, des dispositifs de débrayage **68** par l'intermédiaire d'un bras flexible **84** apte à se déformer élastiquement en fonction de la force centrifuge induite par la vitesse de rotation du sous-ensemble tournant **4**. La portion mobile **90** comprend un patin mobile **78** configuré pour venir en position d'accouplement, en appui contre la bague intérieure **14**, et plus particulièrement la surface annulaire intérieure **18**, et de préférence sur une portion au moins de la piste de contact intérieure **26** lorsque le mécanisme est à l'arrêt, et plus généralement en-deçà du seuil de vitesse angulaire de débrayage. Chaque bras flexible **84**, conjugué à la portion mobile **90** qui comprend une répartition des masse configurée pour permettre une bascule, est configurée pour se déformer de sorte à éloigner la portion mobile **90** de l'axe de référence **100**, soulevant le patin mobile **78** associé de la bague intérieure **14** à mesure que la vitesse de rotation du sous-ensemble tournant **4** augmente jusqu'à ce qu'il atteigne une position désaccouplée dans laquelle il n'est plus en contact dudit sous-ensemble tournant **4** dès que la vitesse de rotation dépasse le seuil de vitesse angulaire de débrayage.

L'anneau **62** comprend également des butées radiales **86**, chaque butée radiale **86** étant disposée en regard de la portion mobile **90** associée, radialement plus éloignée de l'axe de référence **100**, de sorte à limiter le déplacement radial centrifuge de la portion mobile **90**.

L'anneau **62** comprend en outre une face annulaire intérieure **79** cylindrique tournée vers l'axe de référence **100**. Elle est destinée à se positionner en regard de la face d'accueil **42** de la bague intérieure **14**. La face annulaire intérieure **79** comprend au moins une languette de retenue **80** saillante radialement vers l'axe de référence **100** et destinée à pénétrer la gorge annulaire **44** de la portion d'accueil **38**. La languette de retenue **80** est configurée pour sécuriser le positionnement axial de la cage de guidage **40** dans le roulement à billes **10**, et est logée sans contact dans la gorge annulaire **44** de la portion d'accueil **38**. Les languettes de retenue **80** sont de préférence flexible, de sorte à être insérée dans la gorge annulaire **44** par déformation élastique.

Le dispositif de passage de courant **70** comprend, pour rappel, les pistes de contact intérieure et extérieure ainsi que la cage de guidage **40** et les billes de contact **35**. Le sous-ensemble fixe **2** est radialement plus éloigné du sous-ensemble tournant **4** au niveau de la première extrémité intérieure **32** qu'au niveau de la deuxième extrémité intérieure **34**. Dans le plan de coupe contenant l'axe de référence **100**, tout segment **S** perpendiculaire à l'axe de référence **100**, et ayant une première extrémité qui appartient à la piste de contact intérieure **26** et une deuxième extrémité qui appartient à la piste de contact extérieure **56**, présente :

- un centre C qui, dans un repère orthonormé direct ayant un axe d'abscisse x confondu avec l'axe de référence **100** et un axe des ordonnées y qui passe par la première extrémité intérieure **32** de la piste de contact intérieure **26**, a une abscisse égale à x et une ordonnée égale à y, définissant une fonction x→ y=f(x) qui, lorsque x varie entre 0 et la deuxième extrémité intérieure **34** de la piste de contact intérieure **26**, est strictement croissante de manière continue ;

- une longueur *l* définissant une fonction x→l=g(x) qui, lorsque l'abscisse x du centre **C** du segment **S** varie entre 0 et la deuxième extrémité intérieure **34**, est strictement décroissante de manière continue, présentant une valeur maximale strictement supérieure au diamètre des billes $D_{BC}$, et une valeur minimale inférieure ou égale au diamètre des billes $D_{BC}$.

Lorsque le roulement est à l'arrêt, les billes de contact **35** se positionnent axialement entre les deux pistes de contact en fonction de la gravité. Par exemple, si l'axe de référence est horizontal, une bille de contact **35** positionnée plus bas que l'axe de référence aura roulé par gravité sur la piste de contact extérieure pour se positionner au plus près des chemins de roulement **24** et **54**. À l'inverse, une bille de contact **35** positionnée plus haut que l'axe de référence **100** se trouvera entraînée par gravité sur la piste de contact intérieure pour se positionner le plus loin des chemins de roulement **24** et **54**. La bille de contact est alors maintenue entre les deux pistes de contact par la butée axiale **72**.

En fonctionnement, lorsque le roulement à billes **10** est en mouvement, le sous-ensemble tournant **4** entraîne avec lui en rotation la cage de guidage **40** par l'intermédiaire des patins mobiles **78**. La cage de guidage **40** entraîne alors en rotation les billes de contact **35** par l'intermédiaire d'une des deux surfaces orthoradiales **76** de chaque alvéoles **66**, billes qui, sous l'effet de la force centrifuge, s'éloigneront de l'axe de rotation qui est confondu avec l'axe de référence **100**. Les billes de contact **35** roulent alors sur la piste de contact extérieure, quelle que soit leur position initiale. Les billes de contact roulent de sorte à s'éloigner le plus possible de l'axe de référence **100** sous l'influence de la force de centrifuge. Elles se déplacent alors radialement et axialement en direction du point de la piste de contact intérieure **26** le plus éloigné radialement de l'axe de référence **100,** ici la deuxième extrémité intérieure **34**. Ce déplacement s'effectue jusqu'à ce que chaque bille de contact **35** atteigne une position dans laquelle elle est en contact avec la piste de contact intérieure **26** et la piste de contact extérieure **56**. Chaque bille de contact **35** est alors dans une position extrême axialement, en contact uniquement avec les deux pistes de contact **26, 56**.

La bille de contact **35** roulant sur la piste de contact intérieure **26** présente une vitesse de rotation autour de l'axe de référence **100** inférieure à la vitesse de rotation du sous-ensemble tournant **4**. La bille de contact **35,** logée dans l'alvéole **66,** entraîne en rotation la cage de guidage **40** qui s'est désolidarisée de la bague intérieure **14** tournante plus rapide, les bras flexibles **84** se déformant élastiquement afin que les portions mobiles **90** basculent, soulevant les patins mobiles **78** de la bague intérieure **14** pour ne pas engendrer de frottements.

Une telle structure de dispositif de passage de courant **70,** comportant des pistes de contact tronconiques, présente, dans un plan de coupe comprenant l'axe de référence, un cercle osculateur de rayon infini, réduisant les ellipses de contact entre la bille de contact **35** et chacune des deux pistes de contact, permettant de fendre plus aisément le film de lubrifiant présent dans le mécanisme, et ainsi diminuer l'impédance du dispositif de passage du courant **70** électrique au niveau du point de contact, prolongeant la durée de vie des pistes de contact ainsi que des pistes de roulement par la réduction, et de préférence, la suppression d'arcs électriques.

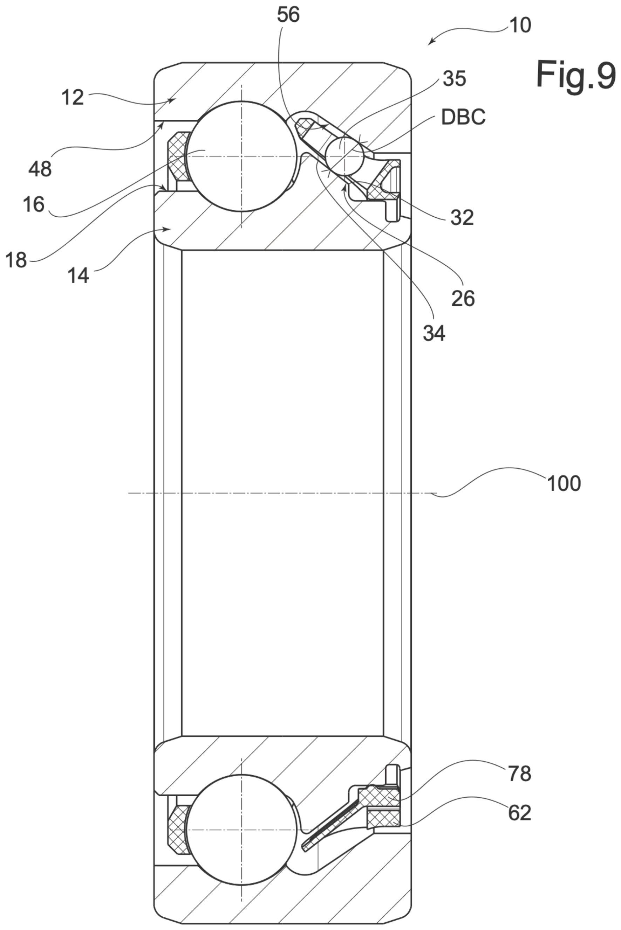

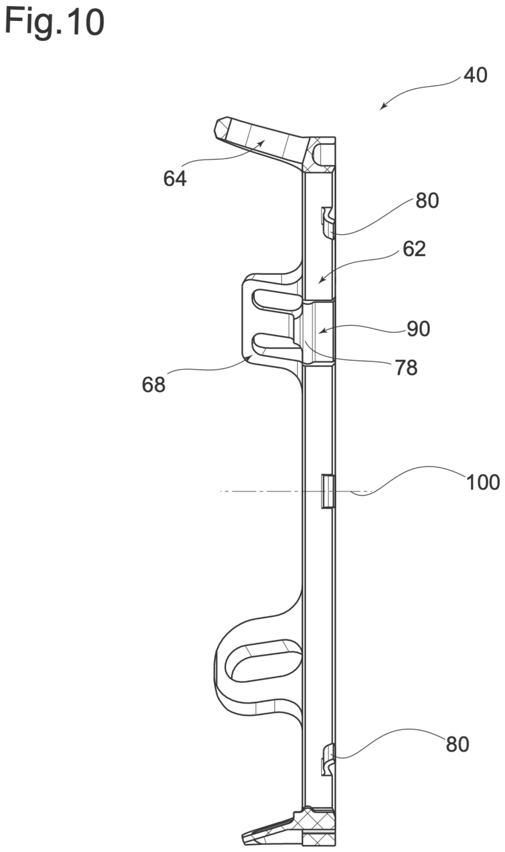

Selon un deuxième mode de réalisation illustré sur les figures 9 et 10, la piste de contact intérieure **26** présente une génératrice intérieure **102** formant, avec l'axe de référence **100,** un angle **A1** de 38° tandis que la piste de contact extérieure **56** présente une génératrice extérieure **104** formant, avec l'axe de référence **100,** un angle **A2** de 34°. Ce mode de réalisation est préféré dans les roulements nécessitant un encombrement axial plus réduit. Les alvéoles **66** et les dispositifs de débrayage **68** présentent alors un angle adapté de sorte à pénétrer entre les deux pistes de contact.

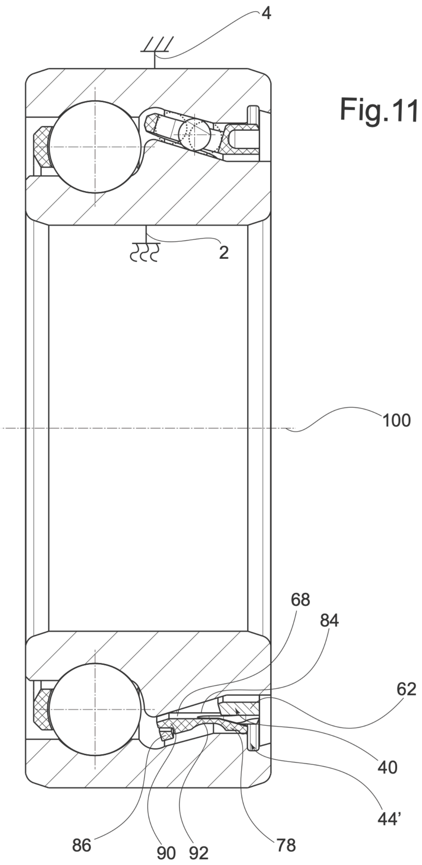

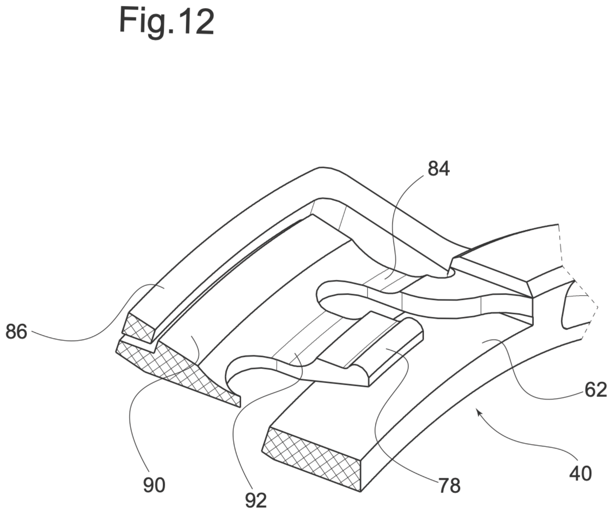

En outre, selon un troisième mode de réalisation alternatif illustré sur les figures 11 et 12, la bague extérieure **12** est liée à un sous-ensemble tournant **2,** la bague intérieure **14** pouvant être liée à un sous-ensemble fixe ou tournant. Dans cette hypothèse, on prévoit que la cage de guidage **40** n'est pas liée à la piste de contact intérieure **26** mais à la surface annulaire extérieure **48,** de préférence au moins partiellement à la piste de contact extérieure **56**. Pour ce faire, le bras flexible **84** lie l'anneau **62** à la portion mobile **90** qui lui est axialement saillante, la portion mobile **90** comprenant le patin mobile **78** saillant de cette dernière et situé dans une projection radiale de l'anneau **62**. La portion mobile **90** présente une masse supérieure à celle du patin mobile **78** qui lui est lié par un bras indéformable **92,** on entend ici dans les conditions d'utilisation de cette pièce. Le patin mobile **78** est situé radialement plus loin de l'axe de référence **100** que la portion mobile **90**. Dans ce mode de réalisation, la butée radiale **86** est aussi tournée radialement vers l'axe de référence **100,** cependant, elle est en regard de la portion mobile **90** pour limiter un déplacement radial de ladite portion mobile **90** vers l'extérieur. En fonctionnement, lorsque la vitesse de rotation de la cage de guidage **40** est suffisamment élevée, la portion mobile **90** s'éloigne de l'axe de référence **100,** éloignement rendu possible par la flexibilité du bras flexible **84** et mis en œuvre par la force centrifuge agissant sur la masse de ladite portion mobile **90**. Par effet de levier, lorsque la portion mobile **90** s'éloigne de l'axe de référence **100,** le patin mobile **78** est déplacé radialement en direction de l'axe de référence **100,** ce qui le décolle de la piste de contact extérieure **56**. En outre, dans ce mode de réalisation, les languettes de retenue **80** sont saillantes radialement de manière centrifuge et sont logées dans une gorge annulaire **44'** située sur la bague extérieure **12**.

Les exemples représentés sur les figures et discutés ci-dessus ne sont donnés qu'à titre illustratif. D'autres modes de réalisation peuvent être envisagés, notamment en combinant les caractéristiques des différents exemples de réalisation illustrés.

Par exemple, selon un mode de réalisation alternatif, l'anneau **62** peut être équipé d'un nombre N, différent de trois, d'alvéoles **66** décalées angulairement les unes des autres d'un angle $2\pi/N$. Indépendamment, l'anneau **62** peut être équipé d'un nombre N', différent de trois, de dispositifs de débrayage **68** décalés angulairement les uns des autres d'un angle 2π/N'.

Selon un autre mode de réalisation alternatif, le dispositif de passage de courant **70** est formé par deux bagues distinctes des deux bagues formant les chemins de roulement. Selon une variante, le dispositif de passage de courant **70** est formé par deux bagues distinctes dont l'une forme également l'un des chemins de roulement, l'autre chemin de roulement étant formé sur une bague distincte des deux bagues du dispositif de passage de courant. Une variante également réalisable serait de former le dispositif de passage de courant avec une bague montée fixement à l'un des deux sousensembles **2,4** du dispositif tournant, permettant l'assemblage la fixation de la cage de guidage et l'apport de l'une des deux pistes de contact, l'autre piste de contact étant réalisée directement sur l'autre sous-ensemble **2,4,** qui constitue dans cette hypothèse l'autre bague.

Selon un autre mode de réalisation alternatif, le roulement présente des corps roulants **16** qui ne sont pas des billes, mais des rouleaux cylindriques ou coniques, ou en forme de tonnelets par exemple.

Selon un autre mode de réalisation alternatif, les pistes de contact intérieure **26** et extérieure **56** s'éloignent l'une de l'autre à mesure qu'elles se rapprochent des chemins de guidage. La cage de guidage **40** comprend alors des alvéoles ainsi qu'au moins un dispositif de débrayage centrifuge **68** adapté, inséré entre les deux pistes de contact par déformation.

Selon un autre mode de réalisation alternatif, le dispositif de passage de courant **70** est monté sur deux bagues formant un palier lisse.

## Revendications

1.  Cage de guidage (40) destinée à être positionnée au moins partiellement entre deux bagues, l'une des deux bagues étant une bague tournante apte à tourner par rapport à l'autre bague autour d'un axe de révolution, les deux bagues formant deux pistes de contact opposées, ayant chacune une symétrie de révolution autour de l'axe de révolution, la cage de guidage (40) comportant un corps annulaire (62) définissant un axe de référence (100) destiné à être confondu avec l'axe de révolution, le corps annulaire (62) formant au moins une alvéole (66) destinée à accueillir un corps roulant de contact (35), la cage de guidage (40) étant **caractérisée en ce qu'**elle comporte au moins un dispositif de débrayage centrifuge (68) mobile, sous un effet de force centrifuge, entre une position d'accouplement, destinée à être une position de contact frottant avec la bague tournante, en deçà d'un seuil de vitesse angulaire, dit seuil de vitesse angulaire de débrayage, de la cage de guidage autour de l'axe de référence, et une position désacouplée, destinée à être une position sans contact avec les deux bagues, au-delà du seuil de vitesse angulaire.

2.  Cage de guidage (40) selon la revendication 1, **caractérisée en ce que** le dispositif de débrayage centrifuge (68) comporte au moins une portion mobile (90) reliée au corps annulaire (62) par au moins un bras flexible (84).

3.  Cage de guidage (40) selon la revendication 2, **caractérisée en ce que** le dispositif de débrayage centrifuge (68) comporte une butée (86) positionnée en regard d'une partie au moins de la portion mobile (90), de sorte à limiter un débattement radial de la portion mobile (90) au-delà du seuil de vitesse angulaire de débrayage.

4.  Cage de guidage (40) selon la revendication 2 ou 3, **caractérisée en ce que** la portion mobile (90) comprend un patin mobile (78) destiné à être en contact frottant avec la bague tournante en deçà du seuil de vitesse angulaire de débrayage, en position d'accouplement, la portion mobile (90) présentant de préférence une répartition de masse configurée pour provoquer une déformation du bras flexible (84) induisant un décollement du patin mobile (78) de la bague tournante au-delà du seuil de vitesse angulaire de débrayage.

5.  Cage de guidage (40) selon la revendication 4, **caractérisée en ce que** le décollement du patin mobile (78) est un mouvement éloignant la portion mobile (90) de l'axe de référence (100).

6.  Cage de guidage (40) selon l'une quelconque des revendications précédentes, **caractérisée en ce que** l'alvéole (66) a une dimension apte à laisser au corps roulant de contact une liberté de mouvement radial et/ou axial et radial entre une première position et une deuxième position, plus éloignée de l'axe de référence que la première position.

7.  Cage de guidage (40) selon l'une quelconque des revendications précédentes, **caractérisée en ce que** l'alvéole (66) est oblongue avec un grand axe radial ou sécant avec l'axe de référence.

8.  Cage de guidage (40) selon la revendication 6 ou la revendication 7, **caractérisée en ce que** l'alvéole (66) est délimitée par au moins une butée axiale (72) et deux facettes de guidage (76) opposées se faisant face dans une direction orthoradiale, les deux facettes de guidage (76) étant de préférence planes ou concaves.

9.  Cage de guidage (40) selon l'une quelconque des revendications précédentes, **caractérisée en ce qu'**elle comporte une ou plusieurs languettes de retenue (80) en saillie radiale, destinées à pénétrer dans une gorge de l'une des deux bagues.

**10.** Cage de guidage (40) selon l'une quelconque des revendications précédentes, **caractérisée en ce qu'**elle est réalisée d'une pièce en matière plastique.

**11.** Dispositif tournant comportant :

- deux bagues, l'une des deux bagues étant une bague tournante apte à tourner par rapport à l'autre bague autour d'un axe de révolution, les deux bagues formant deux pistes de contact opposées, ayant chacune une symétrie de révolution autour de l'axe de révolution,

le dispositif étant **caractérisé en ce qu'**il comporte en outre

- une cage de guidage (40) selon l'une quelconque des revendications précédentes, dont le dispositif de débrayage centrifuge (68) est en contact frottant avec la bague tournante en position d'accouplement, et est sans contact avec les deux bagues en position désaccouplée, et
- au moins un corps roulant de contact en matériau électriquement conducteur, logé dans l'au moins une alvéole de la cage de guidage, et apte à se déplacer dans l'alvéole de la cage de guidage par effet centrifuge au moins entre une première position de contact, qui est une position de contact avec une seule des deux pistes de contact opposées et une deuxième position de contact qui est une position de contact simultané avec les deux pistes de contact opposées.

**12.** Dispositif (10) tournant selon la revendication 11, **caractérisé en ce que** le corps roulant de contact a une masse telle qu'il se déplace par effet centrifuge entre la première position de contact et la deuxième position de contact à une vitesse de rotation de la cage de guidage inférieure au seuil de vitesse angulaire de débrayage.

**13.** Dispositif tournant selon l'une quelconque des revendications 11 à 12, **caractérisé en ce que** la cage de guidage (40) présente une face de guidage située en regard et à distance inférieure à 0,5 mm et supérieure à 0,05 mm d'une face correspondante d'une des deux bagues de roulement.

**14.** Palier à roulement **caractérisé en ce qu'**il comporte :

- un dispositif tournant selon l'une quelconque des revendications 11 à 13, les deux bagues étant deux bagues de roulement formant deux chemins de roulement opposés ayant chacun une symétrie de révolution autour de l'axe de révolution situés axialement à distance des deux pistes de contact opposées,
- une cage de roulement, distincte de la cage de guidage, et sans contact avec la cage de guidage,
- des corps roulants de guidage aptes à rouler simultanément sur les deux chemins de roulement.

**15.** Palier lisse **caractérisé en ce qu'**il comporte un dispositif tournant selon l'une quelconque des revendications 11 à 13, les deux bagues étant deux bagues de guidage lisses coopérant l'une avec l'autre par contact mutuel glissant ou par contact glissant chacune avec une face opposée d'un coussinet intermédiaire.

Fig.1

# Fig.2

64

70

62

35

40

36

34

38

32

42

26

22

100

L

102

34

58

104

32

78

62

68

56

# Fig.3

Fig.4

Fig.5

Fig.6

Fig.7

Fig.8

Fig.9

# Fig.10

4

Fig.11

2

100

68

84

62

40

44'

78

86   90  92

Fig.12

Europäisches
Patentamt

European
Patent Office

Office européen
des brevets

**RAPPORT DE RECHERCHE EUROPEENNE**

Numéro de la demande

**EP 25 20 8418**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | JP 2022 118903 A (NACHI FUJIKOSHI CORP) 16 août 2022 (2022-08-16) * figures 1,5,6 * ----- | 1-15 | INV. F16C17/02 F16C19/00 F16C19/06 F16C33/58 F16C41/00 |

| | | | DOMAINES TECHNIQUES RECHERCHES (IPC) |
|---|---|---|---|
| | | | F16C |

Le présent rapport a été établi pour toutes les revendications

| Lieu de la recherche | Date d'achèvement de la recherche | Examinateur |
|---|---|---|
| La Haye | 19 janvier 2026 | Cerva-Pédrin, Sonia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................................
& : membre de la même famille, document correspondant

EPO FORM 1503 03.82 (P04C02)

**EP 4 733 612 A1**

## ANNEXE AU RAPPORT DE RECHERCHE EUROPEENNE
## RELATIF A LA DEMANDE DE BREVET EUROPEEN NO.

EP 25 20 8418

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-01-2026

| Document brevet cité au rapport de recherche | Date de publication | Membre(s) de la famille de brevet(s) | Date de publication |
|---|---|---|---|
| JP 2022118903 A | 16-08-2022 | AUCUN | |

Pour tout renseignement concernant cette annexe : voir Journal Officiel de l'Office européen des brevets, No.12/82

**EP 4 733 612 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2022118903 B